# EUROPEAN PATENT APPLICATION

(11) **EP 4 691 795 A1**
(43) Date of publication of application: **11.02.2026**
(21) Application number: 25193308.1
(22) Date of filing: 01.08.2025
(51) Int. Cl.: B60B 27/00, B60B 27/02, B60B 37/10, F16D 55/22, B60G 3/14, B60G 11/22

(54) **SPINDLE-LESS RUNNING GEAR ASSEMBLY FOR VEHICLES**

(30) Priority: 05.08.2024 US 202463679193 P; 13.06.2025 US 202563823407 P
(71) Applicant: Timbren Industries, Inc., Whitby, Ontario L1N 2B9 (CA)
(72) Inventor: Rezania, Parto, Markham, L3S 3P7 (CA)
(74) Representative: Schmid, Nils T.F.

(57) **Abstract**

A running gear assembly (10) for a vehicle includes an inner flange (100), an optional brake member assembly (200), and a unit hub (300). The inner flange may be connected to either an axle or an independent suspension member. The brake member assembly - when present - may be any type of brake member assembly commonly used for vehicles, including - but not limited to - electrically, hydraulically, or mechanically actuated drum brakes and hydraulically actuated disc brakes. The unit hub allows the wheel and tire assembly to connect to the vehicle without the need for a spindle.

## Description

### CROSS REFERENCES AND PRIORITIES

This Application claims priority from United States Provisional Application No. 63/679,193 filed on 5 August 2024 and United States Provisional Application No. 63/823,407 filed on 13 June 2025, the teachings of each of which are incorporated by reference herein in their entirety.

### BACKGROUND

Wheels and tires are frequently mounted to vehicles - in particular trailers - using a hub assembly which connects to a spindle, the spindle being a substantially cylindrical or frustoconical shaped stud - often connected to an axle which, in turn, is attached to an independent suspension member, or similar suspension system that attaches to the chassis or frame of the vehicle. The hub assembly - which typically includes one or more bearings - then fits over and around the cylindrical or frustoconical shaped stud of the spindle with the hub assembly being secured to the spindle by a nut which threads onto the end of the cylindrical or frustoconical shaped stud. Frequently, the assembly will also include a brake system, a stationary portion of which fits independently on the flange that is permanently attached to the spindle while a rotating portion of the brake system may be rotationally connected to the hub assembly by a plurality of wheel studs extending from the hub opposite the spindle. Alternatively, the rotating portion of the brake system may be integrally connected to the hub assembly, sometimes referred to as an integral hub. When brake action is required, the braking mechanism gets activated, often by a vehicle operator pressing a brake pedal by foot causing brake shoes or pads in the stationary portion of the brake system to engage with a drum or a rotor of the rotating portion of the brake system to slow the rotational speed of the hub. The wheel and tire assembly - which may be referred to herein as a "running gear assembly" - then being configured to fit onto the wheel studs (with or without the brake assembly) and securely connect to the hub assembly by a plurality of lug nuts. Examples of typical brake systems include an electrically or hydraulically actuated drum brake system or a hydraulically actuated disc brake system.

Traditional hub and spindle assemblies used in trailers require a meticulous process of assembly and maintenance. In most cases, this involves disassembling and inspecting existing components, and replacing or adjusting some components as needed. Individual parts - such as bearings, races, seals, castle nuts, washers, cotter pins, dust caps, rubber plugs, grease, grease fittings, and even spindles - must be handled with care. The spindle nut must be tightened in a specific sequence and to the specified torque requirements. Adequate clearances must be maintained; otherwise, the hub may be either too loose or too tight. The locking system of the spindle nut must be inspected as well and replaced if necessary. At different service intervals, used grease must be either topped off or thoroughly removed and replaced with fresh grease. If this process is not performed properly and in a timely manner, the hub and spindle assembly becomes prone to failure.

The need exists, therefore, for an improved running gear assembly to connect the suspension or axle to the wheels and tires of a vehicle - in particular a trailer - where the hub component requires little or no maintenance. This would reduce dependence on human intervention, simplify the process, and lower the risk of part failures.

### SUMMARY

Described herein is a running gear assembly having an inner flange and a unit hub. The inner flange having a substantially vertical face and a plurality of pins extending outwardly from the substantially vertical face. The unit hub having a housing, a shaft, and an outer flange. The housing being configured to connect to the inner flange. The shaft rotatably connected to the housing, and the outer flange attached to and extending from the shaft. The outer flange including a plurality of wheel studs extending therefrom.

In some exemplary embodiments, the running gear assembly may include at least one bearing. When present, the bearing may be located at an interface between the housing and the shaft. In certain such embodiments, the housing may include a housing interior and a mounting plate having an access hole extending therethrough; the shaft may include an internally threaded hole extending into a shaft proximal end; the at least one bearing may encompass at least a portion of a shaft outer surface; and the housing may rotatably connect to the shaft via the at least one bearing by passing a central bolt through the access hole and threading said central bolt into the internally threaded hole. In some such embodiments, the running gear assembly may include an end cap which - when present - may be disposed between the mounting plate and the stud proximal end with a portion of the end cap encompassing a portion of the shaft outer surface at the stud proximal end. In certain such embodiments, the portion of the end cap encompassing the portion of the shaft outer surface may include an end cap outer surface having a plurality of end cap teeth. In some such embodiments, the plurality of end cap teeth may be configured to interact with a wheel speed sensor for an antilock braking system (ABS) extending through a housing sidewall. In certain such embodiments, the unit hub may include a plug threadably engaged with a threaded hole in a housing proximal end.

In certain exemplary embodiments, the running gear assembly may include a brake member assembly. When present, a first portion of the brake member assembly may be fixedly connected to the inner flange while a second portion of the brake member assembly may be rotatably connected to the outer flange by the plurality of wheel studs.

In some exemplary embodiments, the brake member assembly may include a drum brake, a drum, and an actuating mechanism. In such embodiments, the drum brake may include one or more shoes and a plurality of drum brake pin holes with the plurality of drum brake pin holes configured to connect the drum brake to the inner flange by passing each pin of the plurality of pins through a corresponding drum brake pin hole of the plurality of drum brake pin holes. The drum may have a plurality of drum wheel stud holes configured to connect the drum to the unit hub by passing each wheel stud of the plurality of wheel studs through a corresponding drum wheel stud hole of the plurality of drum wheel stud holes. The actuating mechanism may be configured to extend the one or more shoes outwardly from the drum brake to frictionally engage with the drum when activated by a user. In certain embodiments, the actuating mechanism may be selected from the group consisting of an electronic brake controller, an electric over hydraulic brake actuator, a hydraulic surge actuator, an air-over-hydraulic actuator, and a mechanical handbrake assembly. In some embodiments, the actuating mechanism may be an electronic actuating mechanism electrically connected to a brake pedal.

In certain exemplary embodiments, the brake member assembly may include a caliper body, a rotor, and an actuating mechanism. In such embodiments, the caliper body may include a pair of opposing pads and may be mounted to a caliper bracket having a plurality of caliper bracket pin holes. The plurality of caliper bracket pin holes may be configured to connect the caliper bracket to the inner flange by passing each pin of the plurality of pins through a corresponding caliper bracket pin hole of the plurality of caliper bracket pin holes. The rotor may include a plurality of rotor wheel stud holes configured to connect the rotor to the unit hub by passing each wheel stud of the plurality of wheel studs through a corresponding rotor wheel stud hole of the plurality of rotor wheel stud holes. The actuating mechanism may be configured to extend the pair of opposing pads inwardly from the caliper body to frictionally engage with the rotor when activated by a user. In some embodiments, the actuating mechanism may be a hydraulic actuating mechanism hydraulically connected to a brake pedal.

In some exemplary embodiments, the inner flange may be configured to connect to an axle. In some such embodiments, the axle may include a leaf spring suspension member. In other such embodiments, the axle may include a rubber torsion-style suspension member.

In certain exemplary embodiments, the inner flange may be configured to connect to an axle-less suspension unit. In some such embodiments, the axle-less suspension unit may include a hanger, a control arm, a jounce spring, and a rebound spring. The hanger may have an outboard plate comprising a first control arm connection hole, an inboard plate comprising a second control arm connecting hole, a top wall connecting between an outboard plate upper edge and an inboard plate upper edge, and a front wall connecting between an outboard plate leading edge and an inboard plate leading edge. The control arm may have a forward wall connected to an upper wall with a mounting stud connected to an upper wall proximal end. The jounce spring may be positioned between the upper wall top surface and a top wall bottom surface. The rebound spring may be positioned between a forward wall outer surface and a front wall inner surface. A mounting bolt may connect the control arm to the hanger by passing through the first control arm connecting hole, the mounting stud, and the second control arm connecting hole.

In some exemplary embodiments, the running gear assembly may be void of a spindle.

### BRIEF DESCRIPTION OF FIGURES

FIG. 1 is an exploded isometric view of an embodiment of a running gear assembly for a vehicle having a drum style brake member assembly.
FIG. 2 is an assembled isometric view of an embodiment of a running gear assembly for a vehicle having a drum style brake member assembly.
FIG. 3 is an exploded cross section view of an embodiment of a running gear assembly for a vehicle having a drum style brake member assembly.
FIG. 4 is an assembled cross section view of an embodiment of a running gear assembly for a vehicle having a drum style brake member assembly.
FIG. 5 is an exploded isometric view of an embodiment of a running gear assembly for a vehicle having a disc style brake member assembly.
FIG. 6 is an assembled isometric view of an embodiment of a running gear assembly for a vehicle having a disc style brake member assembly.
FIG. 7 is an exploded cross section view of an embodiment of a running gear assembly for a vehicle having a disc style brake member assembly.
FIG. 8 is an assembled cross section view of an embodiment of a running gear assembly for a vehicle having a disc style brake member assembly.
FIG. 9A is an exploded view showing two running gear assemblies for attachment to a vehicle axle.
FIG. 9B is an assembled view showing two running gear assemblies attached to a vehicle.
FIG. 10A is an exploded view showing a running gear assembly for attachment to an axle-less suspension unit of a vehicle.
FIG. 10B is an assembled view showing a running gear assembly attached to an axle-less suspension unit of a vehicle.

### DETAILED DESCRIPTION

Disclosed herein is a running gear assembly for a vehicle. The running gear assembly is described below with reference to the Figures. As described herein, the following numbers refer to the following structures as noted in the Figures.
10 refers to a running gear assembly.
100 refers to an inner flange.
110 refers to a vertical face.
120 refers to a pin.
200 refers to a brake member assembly.
210 refers to a drum brake.
211 refers to a drum.
212 refers to a drum brake pin hole.
213 refers to a drum wheel stud hole.
215 refers to a magnet.
220 refers to a caliper body.
221 refers to a rotor.
222 refers to a caliper bracket.
223 refers to a caliper bracket pin hole.
224 refers to a rotor wheel stud hole.
225 refers to a brake pad.
230 refers to an internal retainer.
240 refers to a housing seal.
300 refers to a unit hub.
310 refers to a housing.
312 refers to a housing interior.
313 refers to a mounting plate.
314 refers to an access hole.
315 refers to a housing sidewall.
316 refers to a threaded hole.
317 refers to a housing proximal end.
320 refers to a shaft.
321 refers to a shaft proximal end.
322 refers to a shaft outer surface.
324 refers to an internally threaded hole.
330 refers to an outer flange.
331 refers to a wheel stud.
335 refers to a hub face.
340 refers to a bearing.
350 refers to a central bolt.
360 refers to an end cap.
361 refers to an end cap outer surface.
362 refers to end cap teeth.
370 refers to a wheel speed sensor.
380 refers to a plug.
400 refers to an axle.
410 refers to a first mounting surface.
420 refers to a second mounting surface.
500 refers to an axle-less suspension unit.
510 refers to a mounting surface.
600 refers to a hanger.
610 refers to an outboard plate.
612 refers to a first control arm connecting hole.
614 refers to an outboard plate upper edge.
616 refers to an outboard plate leading edge.
620 refers to an inboard plate.
622 refers to a second control arm connecting hole.
624 refers to an inboard plate upper edge.
626 refers to an inboard plate leading edge.
630 refers to a top wall.
632 refers to a top wall bottom surface.
640 refers to a front wall.
700 refers to a control arm.
710 refers to a forward wall.
720 refers to an upper wall.
722 refers to an upper wall proximal end.
730 refers to a mounting stud.
740 refers to a mounting bolt.
800 refers to a jounce spring.
900 refers to a rebound spring.

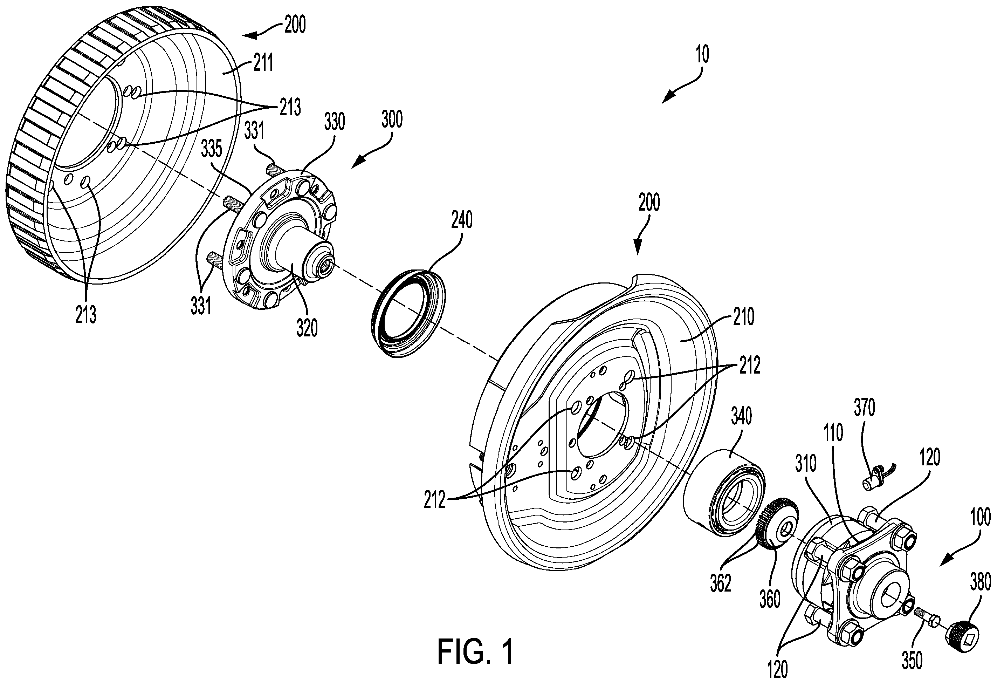

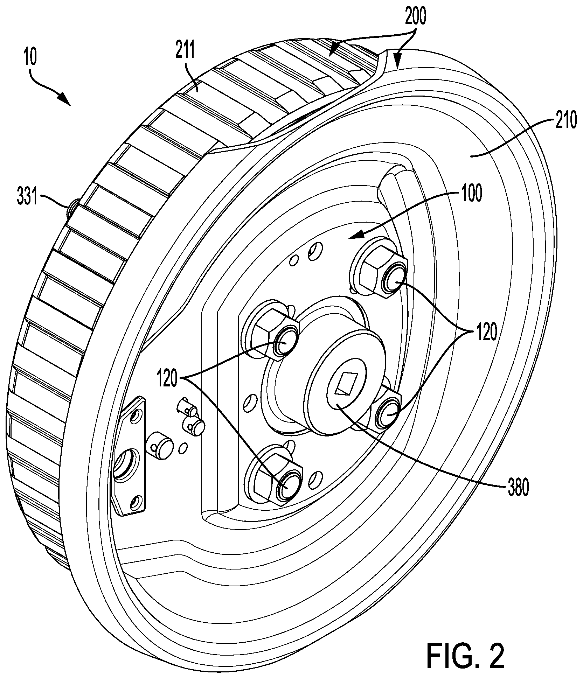

FIG. 1 illustrates an exploded view of an exemplary embodiment of a running gear assembly (10) for a vehicle with FIG. 2 illustrating an assembled view thereof. In the embodiment shown in FIGS. 1 and 2, the running gear assembly utilizes a conventional drum brake system which may be actuated electronically, hydraulically, or mechanically. Non-limiting examples of actuating devices for the drum brake system include an electronic brake controller, an electric over hydraulic brake actuator, a hydraulic surge actuator, an air-over-hydraulic actuator, and a mechanical handbrake assembly. The embodiment of a running gear assembly for a vehicle shown in FIG. 1 and FIG. 2 includes an inner flange (100), a brake member assembly (200), and a unit hub (300).

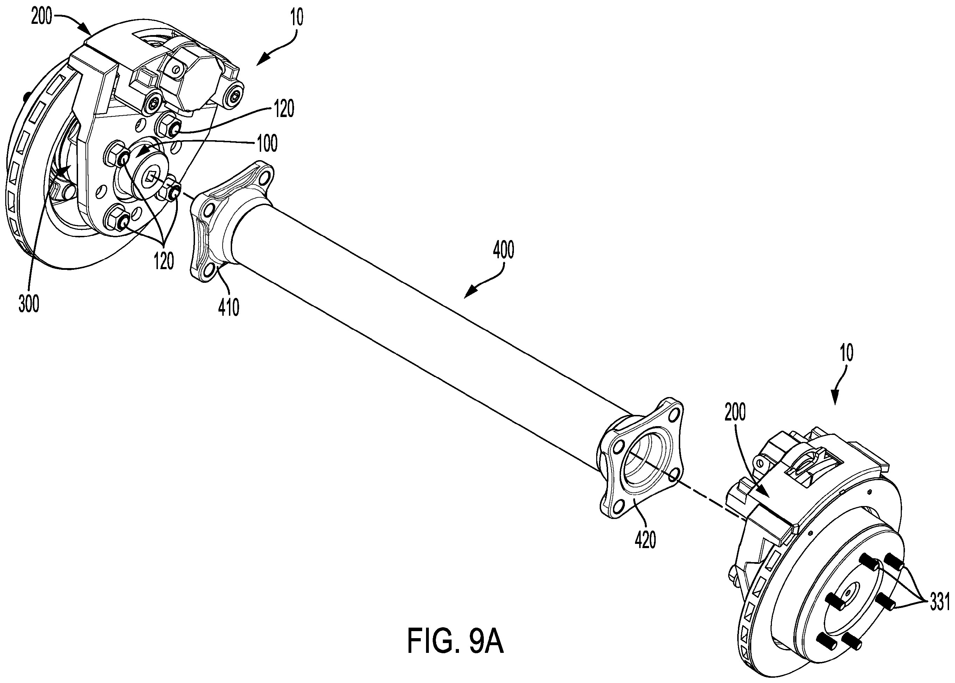

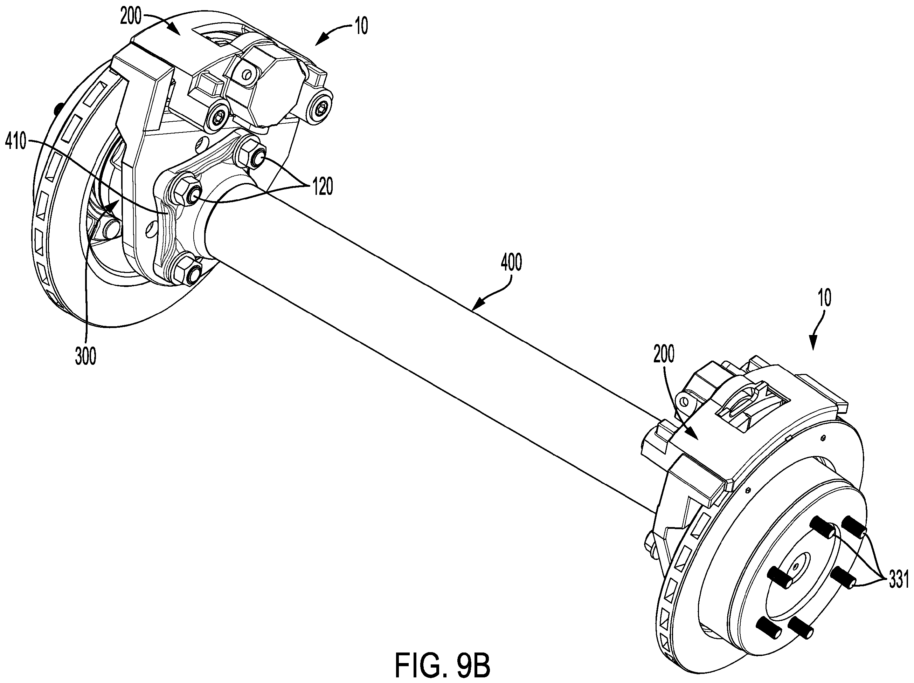

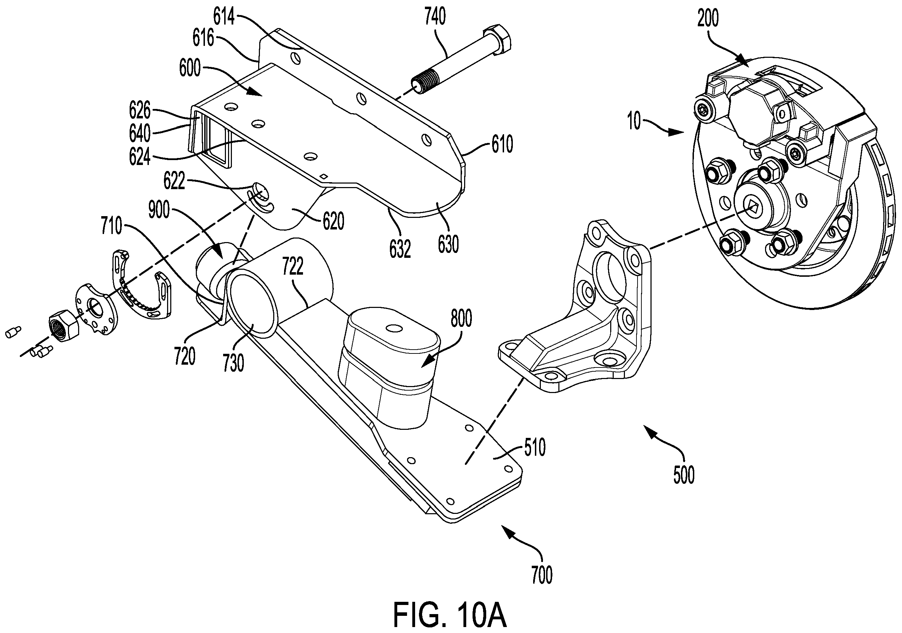

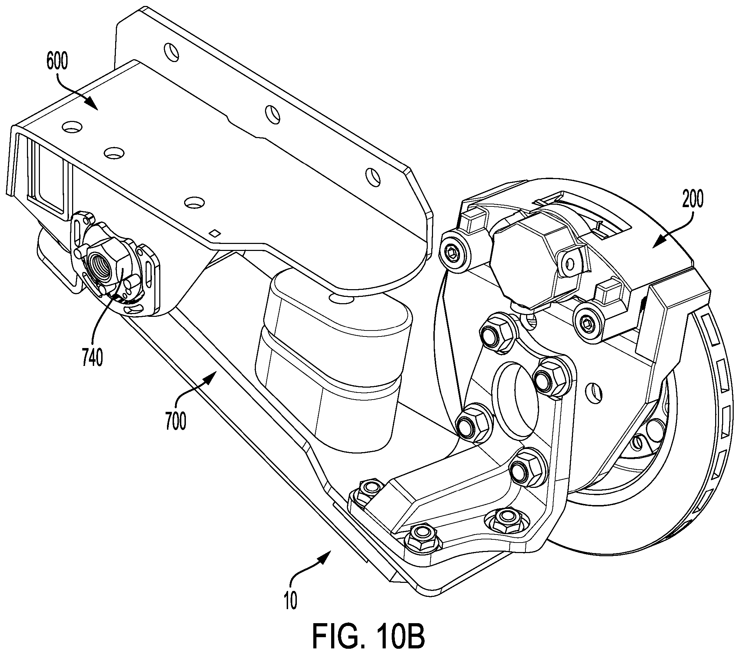

The inner flange (100) includes a substantially vertical face (110) with a plurality of pins (120) extending outwardly therefrom. By "substantially" vertical, it is meant that the face of the inner flange forms an angle relative to the ground surface in a range of between 85° and 95°, preferably in a range of between 88° and 92°, more preferably in a range of between 89° and 91°, and most preferably 90°. In some embodiments, the inner flange may be connected to an axle ((400) as shown in FIGS. 9A and 9B) extending between two opposing sides of the vehicle upon which the running gear assembly (10) is utilized as shown in FIGS. 9A and 9B. In other embodiments, the inner flange may be connected to an independent suspension mechanism which connects to a surface - preferably a frame rail surface - of the vehicle as shown in FIGS. 10A and 10B.

In the embodiment shown in FIG. 1 and FIG. 2, the brake member assembly (200) is in the form of a drum brake system. Electrically, hydraulically, or mechanically actuated drum brakes are commonly utilized on vehicles - in particular trailers - and include a drum brake (210) and a drum (211). The drum brake includes a plurality of drum brake pin holes (212) with each drum brake pin hole configured to allow a pin of the plurality of pins (120) to pass through the drum brake for mounting the drum brake to the inner flange (100). The drum is configured to mount to the unit hub (300) as described herein in a manner which allows the drum to rotate while the drum brake remains stationary relative to the frame of the vehicle during vehicle operation. When actuated - such as by an electronic actuating mechanism interacting with a magnet (215) and magnet adapter of the drum brake assembly or a hydraulic actuating mechanism interacting with a hydraulic brake uni-servo or duo-servo wheel cylinder of the hydraulic drum brake assembly - one or more shoes or pads on the drum brake extend outwardly and frictionally engage with the inside of the drum to slow the rotation of the wheel and tire assembly. Embodiments of an electronic actuating mechanism are well known in the art and may include a brake pedal within the vehicle's cabin electrically connected to the drum brake such that an electrical signal initiated by depressing the brake pedal causes the shoes or pads on the drum brake to extend outwardly. Similarly, embodiments of a hydraulic actuating mechanism are well known in the art and may include a brake pedal mechanically connected to a master cylinder having a hydraulic fluid reservoir such that, when the brake pedal is depressed, hydraulic fluid travels through a line extending from the master cylinder to the drum brake causing the shoes or pads to extend outwardly.

In some embodiments, the drum brake system - particularly in embodiments where the drum brake system is an electric drum brake system - may include a magnet adapter. When present, the magnet adapter may be connected to and extend from a rear surface of the outer flange (330) of the unit hub (300) and may surround all or a portion of a shaft (320) of said unit hub. The magnet adapter rotates constantly with the outer flange during operation of the vehicle and allows direct contact with a magnet of the drum brake (210) allowing for drag when the vehicle operator applies the brakes. This creates a friction load that causes the brake pads in the drum brake to open and be pushed against the inside of the drum (211) creating the braking power.

The unit hub (300) includes a housing (310), a shaft (320) rotatably connected to the housing, and an outer flange (330) attached to and extending from the shaft. In the embodiment shown in FIGS. 1 and 2, the housing has been integrally connected to the inner flange (100). However, embodiments may exist in which the housing is a separate component which fastens to the inner flange by passing the pins (120) through corresponding unit hub pin holes in the housing. Once the drum brake (210) (and the housing in embodiments where the housing is not integrally connected to the inner flange) have been disposed over the pins they may be secured to the inner flange by a plurality of nuts, each of which threads onto one of the plurality of pins.

The shaft (320) rotatably connects to the housing (310). The outer flange (330) is attached to and extends from the shaft and includes a plurality of wheel studs (331) extending from a hub face (335) thereof. In the embodiment shown in FIG. 1 and FIG. 2, the drum (211) includes a plurality of drum wheel stud holes with each drum wheel stud hole configured to allow a wheel stud of the plurality of wheel studs to pass through the drum for mounting the drum to the unit hub. The wheel and tire assembly may then be mounted to the wheel studs with the wheel and tire assembly and the drum secured to the unit hub by a plurality of nuts, each of which threads onto one of the plurality of wheel studs.

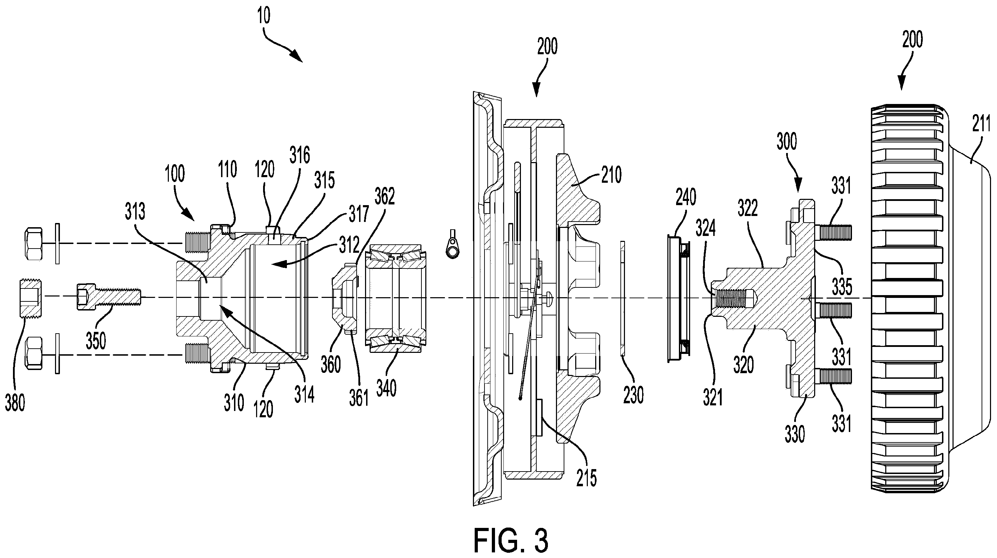

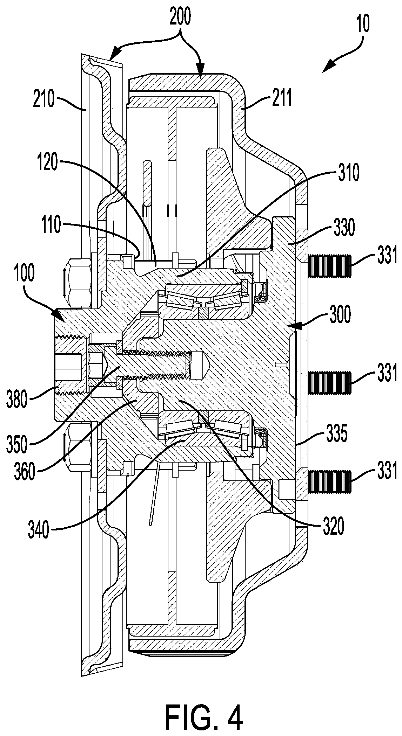

The unit hub (300) may also include a bearing (340) as illustrated in FIG. 1. When assembled as shown in FIG. 2, the bearing will be located at an interface between the housing (310) and the shaft (320) to reduce the coefficient of friction between the housing and the shaft and outer flange (330) assembly during operation. In some embodiments, the bearing may be press fit into the housing interior (312) and secured within the housing interior by an internal retainer (230), such as a snap ring interacting with a snap ring groove in the housing interior proximal to the bearing. In other embodiments, the bearing may be an integral component manufactured into the housing interior. A housing seal (240) may be applied to the terminal end of the housing interior proximal to the internal retainer to prevent dirt, debris, and moisture from entering the housing interior and/or components of the bearing. A central bolt (350) may be present to removably connect the housing to the shaft as described herein with reference to FIGS. 3 and 4.

In some embodiments, the unit hub (300) may also include an end cap (360) as shown in FIG. 1. When present, the end cap may be connected to the housing (310) and the shaft (320) as described herein with reference to FIGS. 3 and 4. The end cap may include an end cap outer surface (361) having a plurality of end cap teeth (362) configured to interact with an antilock braking system (ABS) wheel speed sensor (370). Alternatively, the end cap may include a separate tone ring which may be included in the end cap or the shaft for purposes of interacting with an antilock braking system wheel speed sensor.

FIG. 1 also illustrates an optional plug (380) for the unit hub (300). When present, the plug may engage with the housing (310) to prevent dirt, debris, and moisture from entering the interior of the unit hub assembly as described herein with reference to FIGS. 3 and 4.

FIGS. 3 and 4 illustrate exploded (FIG. 3) and assembled (FIG. 4) cross section views of an exemplary embodiment of a running gear assembly (10) for a vehicle including a drum style brake member assembly (200) similar or identical to that shown in FIGS. 1 and 2. As further illustrated in FIGS. 3 and 4 the housing (310) of the unit hub (300) may include a housing interior (312) with a mounting plate (313) disposed therein. The mounting plate including an access hole (314) extending substantially axially therethrough. To removably connect the housing to the shaft (320) and outer flange (330) assembly, the central bolt (350) passes through the access hole and threads into an internally threaded hole (324) extending into the shaft proximal end (321).

In the embodiment shown in FIGS. 3 and 4, the bearing (340) encompasses at least a portion of the shaft outer surface (322) while the end cap (360) is disposed between the mounting plate (313) and the shaft proximal end (321) such that a portion of the end cap encompasses a portion of the shaft outer surface (322).

An embodiment of the optional plug (380) is also shown in the embodiment illustrated in FIGS. 3 and 4. As shown in FIG. 3, the plug includes a threaded outer surface configured to threadably engage with a threaded hole having a threaded inner surface in a housing proximal end. While the Figures illustrate a threaded connection between the plug and the housing, other embodiments are possible such as a press fit, use of a snap ring or similar fastener, and/or an o-ring interface.

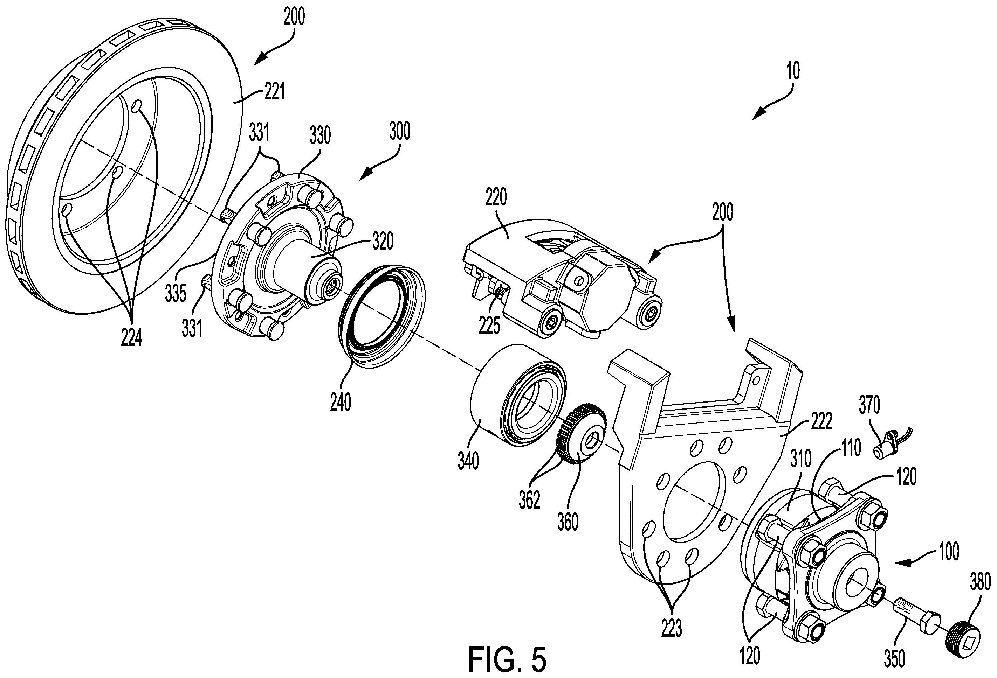

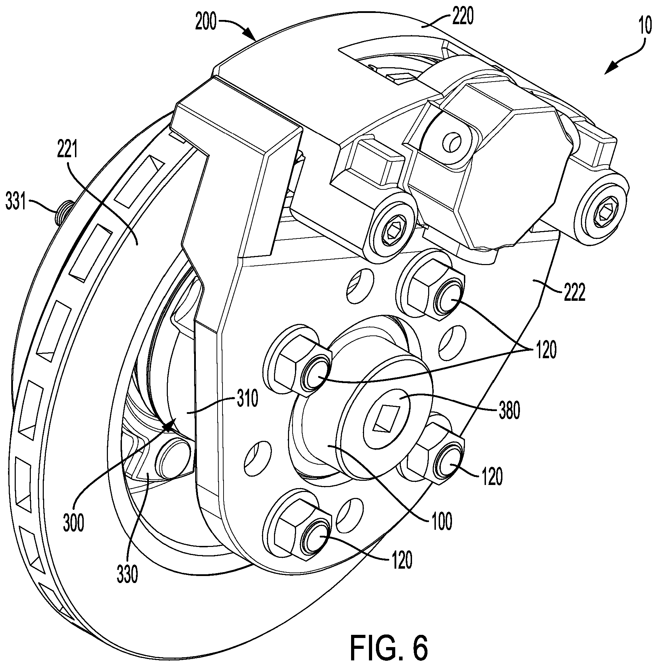

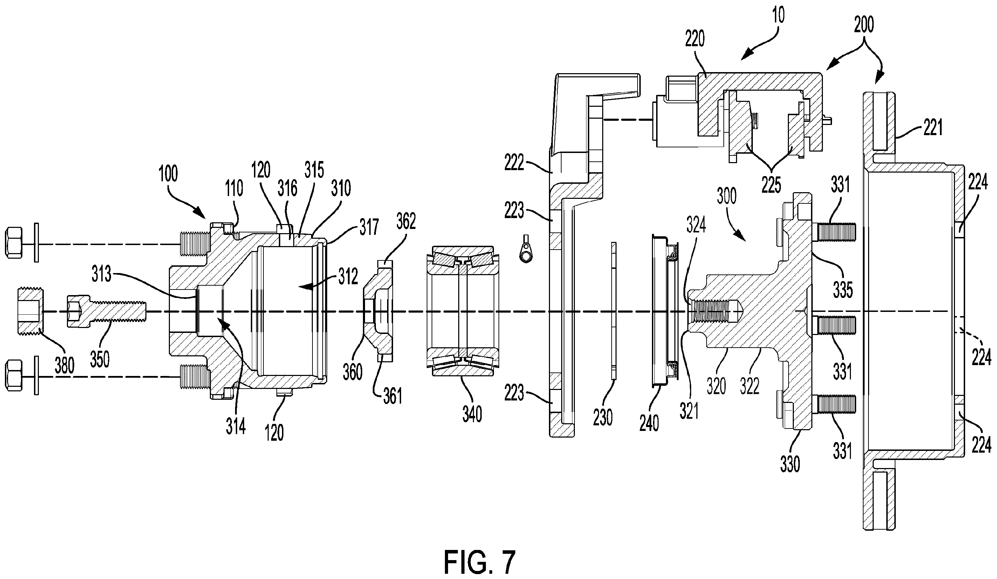

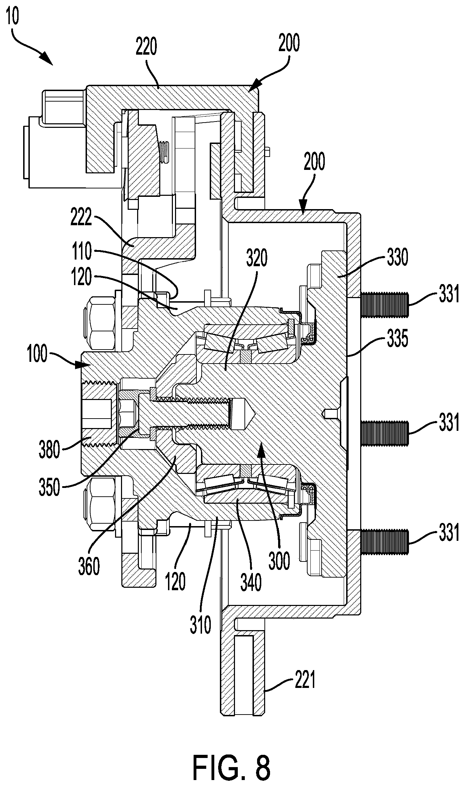

FIG. 5 illustrates an exploded view of an exemplary embodiment of a running gear assembly (10) for a vehicle with FIG. 6 illustrating an assembled view thereof including a disc style brake member assembly (200). FIGS. 7 and 8 illustrate exploded (FIG. 7) and assembled (FIG. 8) cross section views of an exemplary embodiment of a running gear assembly (10) for a vehicle including a disc style brake member assembly similar or identical to that shown in FIGS. 5 and 6. In the embodiments shown in FIG. 5 through FIG. 8, the running gear assembly utilizes a disc brake system which may be actuated hydraulically. The embodiments of a running gear assembly for a vehicle shown in FIG. 5 through FIG. 8 includes an inner flange (100), a brake member assembly (200), and a unit hub (300). The inner flange and the unit hub in the embodiments shown in FIGS. 5 through 8 may be substantially similar, if not identical, to the inner flange and unit hub shown in FIGS. 1 through 4 and described herein.

In the embodiments shown in FIG. 5 through FIG. 8, the brake member assembly (200) is in the form of a disc brake system. Hydraulically actuated disc brakes are commonly utilized on many vehicles and include a caliper body (220) and a rotor (221). The caliper body may be mounted to a caliper bracket (222) which includes a plurality of caliper bracket pin holes (223) with each caliper bracket pin hole configured to allow a pin of the plurality of pins (120) to pass through the caliper bracket for mounting the caliper bracket to the inner flange (100). Certain of the caliper bracket pin holes may be considered redundant pin holes which allow the caliper body to be installed in a variety of different positions on the caliper bracket. That is to say that - in any given application - it is possible that less than the total plurality of caliper bracket pin holes may be used for purposes of connecting the caliper body to the caliper bracket. Once the caliper bracket and the housing (310) of the unit hub (300) have been disposed over the pins they may be secured to the inner flange by a plurality of nuts, each of which threads onto one of the plurality of pins. The rotor is configured to mount to the unit hub as described herein in a manner which allows the rotor to rotate while the caliper body remains stationary during vehicle operation. When actuated - such as by the hydraulic actuating mechanism - two opposing brake pads (225) within the caliper body extend inwardly and frictionally engage the opposing outer surface of the caliper body to slow the rotation of the wheel and tire assembly. Embodiments of a hydraulic actuating mechanism are well known in the art and may include a brake pedal mechanically connected to a master cylinder having a hydraulic fluid reservoir such that, when the brake pedal is depressed, hydraulic fluid travels through a line extending from the master cylinder to the caliper body causing the opposing pads to extend inwardly towards one another.

In the embodiments shown in FIG. 5 through FIG. 8, the rotor (221) includes a plurality of rotor wheel stud holes (224) with each rotor wheel stud hole configured to allow a wheel stud of the plurality of wheel studs (331) to pass through the rotor for mounting the rotor to the unit hub (300). The wheel and tire assembly may be mounted to the flange of the unit hub - either directly or indirectly - via the rotor of a disc brake or the drum of a drum brake assembly, using the wheel studs (331) on the flange. The assembly is then secured with a plurality of wheel nuts, each threading onto one of the wheel studs.

Embodiments of a running gear assembly (10) described herein may be utilized with any number of different vehicles including cars, truck, sport-utility vehicles, and trailers. In some embodiments, the vehicle may include an axle to which a pair of opposing running gear assemblies may be connected. One such embodiment is illustrated in FIGS. 9A and 9B. As shown in FIG. 9A, the axle (400) may include a pair of opposing mounting surfaces - a first mounting surface (410) and a second mounting surface (420) - to which the inner flange (100) of the opposing running gear assemblies may be connected as illustrated in FIG. 9B. Preferably, the connection will be a removable connection formed by a plurality of fasteners such as bolts and nuts, screws, rivets, clamps, and the like allowing the running gear assembly to be removed from the axle for repair, replacement, and/or maintenance. However, embodiments may exist in which one or both of the connections will be a permanent connection such as that achieved by welding the inner flange to the mounting surface and/or manufacturing the inner flange and the axle of a single integral piece of material.

The axle may be a separate item or an integral part of a number of different suspension systems including combinations of different linkages, shock absorbers, and springs to support the axle's connection to the vehicle and allow for relative motion between the two for improving ride quality. One examples of such a suspension system which is well known in the art is a leaf spring suspension in which one or more narrow, arc-shaped thin plates (leaf springs) are attached to the axle and the chassis in a manner which allows the leaf springs to flex vertically in response to irregularities in the road surface. Another example of a suspension system which is well known in the art - and commonly used in trailer suspension systems - is a rubber torsion-style suspension member in which a cartridge comprised of rubber is contained within an axle tube in a manner which allows the cartridge to flex vertically in response to irregularities in the road surface.

Alternatively, embodiments of a running gear assembly (10) described herein may be utilized with an axle-less suspension unit (500) as illustrated in FIGS. 10A and 10B. As shown in FIG. 10A, the axle-less suspension unit may include a mounting surface (510) to which the inner flange (100) of the running gear assembly may be connected as illustrated in FIG. 10B. Preferably, the connection will be a removable connection formed by a plurality of fasteners such as bolts and nuts, screws, rivets, clamps, and the like allowing the running gear assembly to be removed from the axle-less suspension unit for repair and maintenance. However, embodiments may exist in which the connection will be a permanent connection such as that achieved by welding the inner flange to the mounting surface and/or manufacturing the inner flange and the mounting surface of a single integral piece of material.

Exemplary embodiments of an axle-less suspension unit are disclosed in United States Patent No. 8,523,208 B2 and co-pending United States Patent Application No. 19/184,164, the teachings of each of which are incorporated by reference herein in their entirety. Such exemplary embodiments may include a hanger (600), a control arm (700), a jounce spring (800), and a rebound spring (900). FIGS. 10A and 10B illustrate such an embodiment and show additional features of the hanger, control arm, jounce spring, and rebound spring.

As shown in FIG. 10A, the hanger (600) may include an outboard plate (610), an inboard plate (620), a top wall (630), and a front wall (640). The outboard plate including a first control arm connecting hole (612) passing through the outboard plate. Similarly, the inboard plate may include a second control arm connecting hole (622) passing through the inboard plate. Preferably, the first control arm connecting hole will be aligned with the second control arm connection hole in such a manner as to allow a mounting bolt (740) to pass through both the first control arm connecting hole and the second control arm connecting hole when connecting the control arm (700) to the hanger.

The top wall (630) of the hanger (600) connects between an outboard plate upper edge (614) and an inboard plate upper edge (624). When assembled as shown in FIG. 10B, the top wall bottom surface (632) provides a surface against which one end of the jounce spring (800) is positioned.

The front wall (640) of the hanger (600) connects between an outboard plate leading edge (616) and an inboard plate leading edge (626). When assembled as shown in FIG. 10B, the front wall inner surface provides a surface against which one end of the rebound spring (900) is positioned.

As further shown in FIG. 10A, the control arm (700) may include a forward wall (710) connected to an upper wall (720). The upper wall includes an upper wall proximal end (722) and an upper wall terminal end (726). Connected to the upper wall proximal end at or about a juncture with the forward wall is a mounting stud (730) through which the mounting bolt (740) passes to connect the hanger (600) to the control arm as shown in FIG. 10B. In some embodiments, the interior of the mounting stud may include a bushing (not shown).

When assembled as shown in FIG. 10B, the upper wall top surface (724) provides a surface against which one end of the jounce spring (800) - specifically the end opposite the jounce spring end that is positioned against the top wall bottom surface (632) - may be positioned. Further, the forward wall outer surface provides a surface against which one end of the rebound spring (900) - specifically the end opposite the rebound spring end that is positioned against the front wall inner surface - may be positioned. During operation, the jounce spring and rebound spring function together, though they compress and relax simultaneously in opposite directions.

The jounce spring (800) will preferably be made from a first elastomeric polymer material. Similarly, the rebound spring (900) may be made from a second elastomeric polymer material. Examples of such elastomeric material which may be utilized for either or both of the jounce spring and/or the rebound spring include natural rubbers and synthetic rubbers.

The jounce spring (800) will preferably be in the form of a largely solid block of elastomeric polymer material which is slightly tapered. In some embodiments, the jounce spring may include protruding pins configured to pass through holes in the upper wall top surface (724) and/or the top wall bottom surface (632) for mounting the jounce spring without the need for additional hardware. Alternatively, the jounce spring may include one or more apertures that allow the jounce spring to be held in place to the hanger (600) and/or the control arm (700) by way of short mounting bolts or related fasteners such as screws, rivets, or clamps.

The rebound spring (900) will preferably be in the form of a cylindrical elastomeric polymer member. In some embodiments, the rebound spring may include molded-in threaded bushings on opposing flat surfaces. The threaded bushings may serve as a mounting device for connecting the rebound spring to the hanger (600) and/or the control arm (700). Alternatively, the rebound spring may include one or more apertures that allow the rebound spring to be held in place to the hanger and/or the control arm by way of short mounting bolts or related fasteners such as screws, rivets, or clamps.

Preferably one - and more preferably both - of the jounce spring (800) and the rebound spring (900) will be partially preloaded when the suspension is in a fully relaxed position (or when there is no external load on the suspension) - sometimes referred to as the control arm being at rest. Likewise, both springs are preferably both in contact and never get fully relaxed in a fully loaded position of the control arm regardless of the position of the control arm.

Control arm (700), hanger (600), and jounce spring (800) may all be positioned such that the direction of compression and relaxation of jounce spring is substantially vertical. In contrast, control arm, hanger, and rebound spring (900) may all be positioned so that the compression and relaxation of the rebound spring counteracts those of the jounce spring.

The embodiments of a running gear assembly disclosed herein represent an improvement over existing running gear assemblies which include a spindle. By incorporating the unit hub, spindles are eliminated entirely which reduces the risk of part failures brought on by the stresses placed on the spindle. With fewer components, the resulting running gear assembly is also considered easier to maintain when compared to running gear assemblies which utilize spindles.

While the invention has been described as having exemplary designs, the present invention may be further modified within the spirit and scope of the disclosure. This application is therefore intended to cover any variations, uses, or adaptations of the invention using its general principles.

## Claims

1. A running gear assembly (10) comprising:
an inner flange (100) having a substantially vertical face (110) and a plurality of pins (120) extending outwardly from the substantially vertical face; and
a unit hub (300) having:
an housing (310) configured to connect to the inner flange,
a shaft (320) rotatably connected to the housing, and
a outer flange (330) attached to and extending from the shaft, said outer flange including a plurality of wheel studs (331) extending therefrom.

2. The running gear assembly of claim 1, further comprising at least one bearing (340) located at an interface between the housing and the shaft.

3. The running gear assembly of claim 2, wherein:
the housing includes a housing interior (312), and a mounting plate (313) having an access hole (314) extending therethrough;
the shaft includes an internally threaded hole (324) extending into a shaft proximal end (321);
the at least one bearing encompasses at least a portion of a shaft outer surface (322); and
the housing rotatably connects to the shaft via the at least one bearing by passing a central bolt (350) through the access hole and threading said central bolt into the internally threaded hole.

4. The running gear assembly of claim 3, further comprising an end cap (360) disposed between the mounting plate and the stud proximal end with a portion of the end cap encompassing a portion of the shaft outer surface at the stud proximal end, wherein particularly the portion of the end cap encompassing the portion of the shaft outer surface includes an end cap outer surface (361) having a plurality of end cap teeth (362), wherein particularly the plurality of end cap teeth are configured to interact with a wheel speed sensor (370) for an antilock braking system (ABS) extending through an housing sidewall (315).

5. The running gear assembly of claim 3, wherein the unit hub further comprises a plug (380) threadably engaged with an threaded hole (316) in an housing proximal end (317).

6. The running gear assembly of claim 1, further comprising a brake member assembly (200) with a first portion of the brake member assembly fixedly connected to the inner flange, and a second portion of the brake member assembly rotatably connected to the outer flange by the plurality of wheel studs.

7. The running gear assembly of claim 6, wherein the brake member assembly comprises:
a drum brake (210) comprising one or more shoes and a plurality of drum brake pin holes (212) with said plurality of drum brake pin holes configured to connect the drum brake to the inner flange by passing each pin of the plurality of pins through a corresponding drum brake pin hole of the plurality of drum brake pin holes;
a drum (211) having a plurality of drum wheel stud holes (213) configured to connect the drum to the unit hub by passing each wheel stud of the plurality of wheel studs through a corresponding drum wheel stud hole of the plurality of drum wheel stud holes; and
an actuating mechanism configured to extend the one or more shoes outwardly from the drum brake to frictionally engage with the drum when activated by a user.

8. The running gear assembly of claim 7, wherein the actuating mechanism is selected from the group consisting of an electronic brake controller, an electric over hydraulic brake actuator, a hydraulic surge actuator, an air-over-hydraulic actuator, and a mechanical handbrake assembly, or wherein the actuating mechanism is an electronic actuating mechanism electrically connected to a brake pedal.

9. The running gear assembly of claim 6, wherein the brake member assembly comprises:
a caliper body (220) comprising a pair of opposing pads, said caliper body being mounted to a caliper bracket (222) having a plurality of caliper bracket pin holes (223) with said plurality of caliper bracket pin holes configured to connect the caliper bracket to the inner flange by passing each pin of the plurality of pins through a corresponding caliper bracket pin hole of the plurality of caliper bracket pin holes;
a rotor (221) having a plurality of rotor wheel stud holes (224) configured to connect the rotor to the unit hub by passing each wheel stud of the plurality of wheel studs through a corresponding rotor wheel stud hole of the plurality of rotor wheel stud holes; and
an actuating mechanism configured to extend the pair of opposing pads inwardly from the caliper body to frictionally engage with the rotor when activated by a user.

10. The running gear assembly of claim 9, wherein the actuating mechanism is a hydraulic actuating mechanism hydraulically connected to a brake pedal.

11. The running gear assembly of claim 1, wherein the inner flange is configured to connect to an axle (400).

12. The running gear assembly of claim 11, wherein the axle comprises a leaf spring suspension member, or wherein the axle comprises a rubber torsion-style suspension member.

13. The running gear assembly of claim 1, wherein the inner flange is configured to connect to an axle-less suspension unit (500), wherein particularly the axle-less suspension unit comprises:
a hanger (600) having an outboard plate (610) comprising a first control arm connecting hole (612), an inboard plate (620) comprising a second control arm connecting hole (622), a top wall (630) connecting between an outboard plate upper edge (614) and an inboard plate upper edge (624), and a front wall (640) connecting between an outboard plate leading edge (616) and an inboard plate leading edge (626);
a control arm (700) having a forward wall (710) connected to an upper wall (720), with a mounting stud (730) connected to an upper wall proximal end (722);
a jounce spring (800) positioned between the upper wall top surface and a top wall bottom surface (632); and
a rebound spring (900) positioned between a forward wall outer surface and a front wall inner surface; and
wherein a mounting bolt (740) connects the control arm to the hanger by passing through the first control arm connecting hole, the mounting stud, and the second control arm connecting hole.

14. The running gear assembly of claim 1, wherein the running gear assembly is void of a spindle.

15. The running gear assembly of claim 3, further comprising a brake member assembly (200) with a first portion of the brake member assembly fixedly connected to the inner flange, and a second portion of the brake member assembly rotatably connected to the outer flange by the plurality of wheel studs.
